(19) Europäisches Patentamt
European Patent Office
Office européen des brevets

(11) EP 2 490 291 B1

(12) EUROPEAN PATENT SPECIFICATION

(45) Date of publication and mention of the grant of the patent:
**03.12.2014 Bulletin 2014/49**

(21) Application number: **10823360.2**

(22) Date of filing: **09.10.2010**

(51) Int Cl.:
***H01M 10/0567*** *(2010.01)* ***H01M 4/505*** *(2010.01)*
***H01M 4/525*** *(2010.01)* ***H01M 4/58*** *(2010.01)*
***H01M 4/587*** *(2010.01)* ***H01M 10/0525*** *(2010.01)*

(86) International application number:
**PCT/JP2010/067804**

(87) International publication number:
**WO 2011/046092 (21.04.2011 Gazette 2011/16)**

# (54) LITHIUM SECONDARY BATTERY, AND NON-AQUEOUS ELECTROLYTIC SOLUTION FOR USE IN THE LITHIUM SECONDARY BATTERY

LITHIUMSEKUNDÄRBATTERIE UND NICHTWÄSSRIGE ELEKTROLYTLÖSUNG ZUR VERWENDUNG IN DER LITHIUMSEKUNDÄRBATTERIE

ACCUMULATEUR AU LITHIUM ET SOLUTION ÉLECTROLYTIQUE NON AQUEUSE S'UTILISANT DANS CET ACCUMULATEUR AU LITHIUM

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.10.2009 JP 2009237416**

(43) Date of publication of application:
**22.08.2012 Bulletin 2012/34**

(73) Proprietor: **Ube Industries, Ltd.**
**Ube-shi**
**Yamaguchi 755-8633 (JP)**

(72) Inventor: **ABE, Koji**
**Tokyo 105-8449 (JP)**

(74) Representative: **Gille Hrabal**
**Brucknerstrasse 20**
**40593 Düsseldorf (DE)**

(56) References cited:
**JP-A- 2003 257 479**
**JP-A- 2004 234 948**
**JP-A- 2005 085 608**
**JP-A- 2005 203 265**
**US-A1- 2005 053 843**

- **TOBISHIMA S ET AL: "INFLUENCE OF ELECTROLYTE ADDITIVES ON SAFETY AND CYCLE LIFE OF RECHARGEABLE LITHIUM CELLS", JOURNAL OF APPLIED ELECTROCHEMISTRY, SPRINGER, DORDRECHT, NL, vol. 33, no. 2, 1 February 2003 (2003-02-01), pages 143-150, XP001190311, ISSN: 0021-891X, DOI: 10.1023/A:1024039302020**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 490 291 B1

## Description

TECHNICAL FIELD

The present invention relates to a lithium secondary battery which secures good recovery characteristics after low-temperature cycles of the battery even after exposed to high temperatures, and to a nonaqueous electrolytic solution for use in the battery.

BACKGROUND ART

In recent years, lithium secondary batteries have been widely used as power supplies for small-size electronic devices such as mobile telephones, notebook-size personal computers and the like, power supplies for electric vehicles, as well as for electric power storage, etc. These electronic devices and vehicles may be used in a broad temperature range, for example, at midsummer high temperatures or at frigid low temperatures, and are therefore required to have well-balanced and improved charging and discharging cycle properties in a broad temperature range.

In this specification, the term of lithium secondary battery is used as a concept including so-called lithium ion secondary batteries.

The lithium secondary battery is mainly constituted of a positive electrode and a negative electrode containing a material capable of absorbing and releasing lithium, and a nonaqueous electrolytic solution containing a lithium salt and a nonaqueous solvent. As the nonaqueous solvent, used are carbonates such as ethylene carbonate (EC), propylene carbonate (PC), etc.

Lithium secondary batteries, in which a carbon material capable of absorbing and releasing lithium such as coke, artificial graphite, natural graphite or the like is used as the negative electrode, have been widely put into practical use.

The lithium secondary battery using a high-crystalline carbon material such as natural graphite, artificial graphite or the like as the negative electrode material therein has some problems in that the solvent in the nonaqueous electrolytic solution is reduced and decomposed on the surface of the negative electrode therein during charging to give a decomposed product, and the decomposed product deposits on the negative electrode to interfere with the Li ion diffusion on the surface of the negative electrode, whereby an active Li metal may irreversibly deposit on the surface of the negative electrode during charging to lower the battery capacity and to lower the battery safety. Such Li metal deposition noticeably occurs at low temperatures at which, in particular, the Li ion diffusion is retarded frequently.

On the other hand, lithium secondary batteries using $LiCoO_2$ as the positive electrode therein have been most popularized, but the natural resources for Co are hardly available. Accordingly, studies of lithium-containing metal oxides, such as lithium-containing transition metal compounds comprising, as the main constitutive elements, manganese and nickel in place of Co, as well as olivine-type lithium phosphates comprising, as the main constitutive element, iron of which the natural recourses are the most available of all, are being made actively in the art. However, in the batteries using the positive electrode of the type, the main elements to constitute the positive electrode, manganese, nickel and iron, dissolve out as ions in the electrolytic solution and are reduced on the negative electrode; and in particular, in secondary batteries containing a carbon material as the negative electrode active material, the negative electrode resistance may be thereby significantly increased and therefore Li metal may also frequently deposit on the negative electrode therein at low temperatures.

The above-mentioned phenomenon is not a so much serious problem in the case where a positive electrode not containing any of those metal elements of nickel, manganese and iron, such as $LiCoO_2$, is used. In addition, the phenomenon is remarkable after the batteries are exposed to high temperatures for long periods, and therefore, it may be considered that, when batteries are stored at high temperatures, metal ion release from the positive electrode active material and reductive decomposition of solvent on the negative electrode would be promoted.

Patent Reference 1 shows that, in a lithium secondary battery using $LiCoO_2$ as the positive electrode active material and using graphite as the negative electrode active material, when a partially hydrogenated naphthalene compound such as 1,2,3,4-tetrahydronaphthalene is added to the nonaqueous electrolytic solution, then the safety of the battery in overcharging could be enhanced as compared with the case where biphenyl is added thereto.

Patent Reference 2 describes a similar lithium secondary battery in which the nonaqueous electrolytic solution contains a cyclic acid anhydride and an aromatic compound having at least one electron donating group.

In the lithium secondary battery which is described in Patent Reference 3 the nonaqueous solution contains a fluorine-substituted aromatic compound and an aromatic hydrocarbon compound.

CITATION LIST

PATENT REFERENCE

Patent Reference 1: JP-A 2003-229171

Patent Reference 2: US 2005/0053843 A1

Patent Reference 3: JP 2003-257479 A

DISCLOSURE OF THE INVENTION

PROBLEMS THAT THE INVENTION IS TO SOLVE

An object of the present invention is to provide a nonaqueous electrolytic solution for a lithium secondary battery, which comprises a positive electrode containing, as the positive electrode active material, a lithium-containing metal oxide that contains at least one metal element selected from nickel, manganese and iron, a negative electrode containing, as the negative electrode active material, a carbon material capable of absorbing and releasing lithium, and a nonaqueous electrolytic solution of an electrolyte salt dissolved in a nonaqueous solvent, and which secures good recovery characteristics after low-temperature cycles even after exposed to high temperatures; and to provide such a lithium secondary battery using the nonaqueous electrolytic solution.

MEANS FOR SOLVING THE PROBLEMS

The present inventors used a nonaqueous electrolytic solution that contains an aromatic compound such as 1,2,3,4-tetrahydronaphthalene, biphenyl or the like described in the above-mentioned Patent Reference 1, singly by itself, for the purpose of enhancing the performance of the lithium secondary battery that comprises a positive electrode containing, as the positive electrode active material, a lithium-containing metal oxide that contains at least one metal element selected from nickel, manganese and iron, a negative electrode containing, as the negative electrode active material, a carbon material capable of absorbing and releasing lithium, and a nonaqueous electrolytic solution of an electrolyte salt dissolved in a nonaqueous solvent; however, the electrolytic solution was ineffective for preventing the reduction in the recovery rate after low-temperature cycles of the battery after exposure thereof to high temperatures.
Consequently, the present inventors further made assiduous studies for the purpose of solving the above-mentioned problems and, as a result, have found that, in the lithium secondary battery having the configuration as above, when at least two types of aromatic compounds are combined for the nonaqueous electrolytic solution, and concretely, when a cyclohexane ring-having aromatic compound, 1,2,3,4-tetrahydronaphthalene, and at least one aromatic compound selected from cyclohexane ring-free biphenyl derivatives and alkylphenol derivatives are contained in the nonaqueous electrolytic solution each in a concentration of from 0.1 to 5% by mass, then the recovery rate after low-temperature cycles of the battery after exposure thereof to high temperatures can be remarkably increased, and have completed the present invention.
Specifically, the present invention provides the following (1) and (2):

(1) A lithium secondary battery comprising a positive electrode containing, as the positive electrode active material, a lithium-containing metal oxide that contains at least one metal element selected from nickel, manganese and iron, a negative electrode containing, as the negative electrode active material, a carbon material capable of absorbing and releasing lithium, and a nonaqueous electrolytic solution of an electrolyte salt dissolved in a nonaqueous solvent, wherein the nonaqueous electrolytic solution contains from 0.1 to 5% by mass of 1,2,3,4-tetrahydronaphthalene, and from 0.1 to 5% by mass of a biphenyl derivative and/or an alkylphenol derivative,
wherein the biphenyl derivative is a compound represented by the following formula (I):

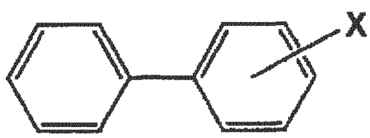

(I)

wherein X represents a hydrogen atom, an alkyl group having from 1 to 6 carbon atoms, a phenyl group, an alkoxy group having from 1 to 6 carbon atoms, or an alkanesulfonyloxy group having from 1 to 6 carbon atoms.

(2) A nonaqueous electrolytic solution for a lithium secondary battery that comprises a positive electrode containing, as the positive electrode active material, a lithium-containing metal oxide that contains at least one metal element selected from nickel, manganese and iron, a negative electrode containing, as the negative electrode active material, a carbon material capable of absorbing and releasing lithium, and a nonaqueous electrolytic solution of an electrolyte salt dissolved in a nonaqueous solvent; the nonaqueous electrolytic solution of an electrolyte salt dissolved in a nonaqueous solvent containing from 0.1 to 5% by mass of 1,2,3,4-tetrahydronaphthalene, and from 0.1 to 5% by mass of a biphenyl derivative and/or an alkylphenol derivative,
wherein the biphenyl derivative is a compound represented by the following formula (I):

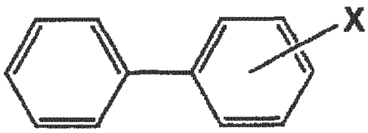 (I)

wherein X represents a hydrogen atom, an alkyl group having from 1 to 6 carbon atoms, a phenyl group, an alkoxy group having from 1 to 6 carbon atoms, or an alkanesulfonyloxy group having from 1 to 6 carbon atoms.

ADVANTAGE OF THE INVENTION

According to the invention, there are provided a lithium secondary battery having an increased recovery rate after low-temperature cycles after exposure of the battery to high temperatures, and a nonaqueous electrolytic solution for use in the battery.

BEST MODE FOR CARRYING OUT THE INVENTION

[Nonaqueous Electrolytic Solution]

The nonaqueous electrolytic solution of the present invention is a nonaqueous electrolytic solution of an electrolyte salt dissolved in a nonaqueous solvent, and contains from 0.1 to 5% by mass of 1, 2, 3 , 4-tetrahydronaphthalene and from 0.1 to 5% by mass of a biphenyl derivative and/or an alkylphenol derivative.
Though not always clear, the reason why the lithium secondary battery of the present invention can be greatly improved in point of the recovery rate thereof after low-temperature cycles after exposure to high temperatures would be because of the following:

Basically, 1,2,3,4-tetrahydronaphthalene has an oxidation potential of about 4.3 V to lithium, and even in use at a final charging voltage of not higher than 4.1V, the compound could be oxidized on the positive electrode in an extremely minor amount to promote proton formation, and therefore has an advantage in that owing to proton reduction, the Li metal on the negative electrode is prevented from depositing thereon. On the other hand, in case where 1,2,3,4-tetrahydronaphthalene is used alone, the positive electrode active material comprising a lithium-containing metal oxide that contains at least one metal element selected from nickel, manganese and iron is corroded by proton to thereby promote the release of metal ion from the positive electrode, and as a result, the positive electrode resistance is thereby increased or the negative electrode resistance is also increased by deposition of the metal ion on the negative electrode, or that is, the case has a problem in that the recovery rate after low-temperature cycles lowers.

However, the present inventors have found that, when a biphenyl derivative and/or an alkylphenol derivative is combined with 1,2,3,4-tetrahydronaphthalene, then the surface of the positive electrode is protected and there does not occur metal release from the positive electrode, or that is, the combined use brings about such a specific effect that could not be attained by the single use of the individual aromatic compounds, and have reached the present invention.
The biphenyl derivative for use in the present invention is represented by the following general formula (I):

[Chemical Formula 1]

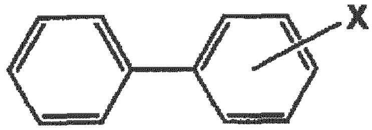

(I)

(In the formula, X represents a hydrogen atom, an alkyl group having from 1 to 6 carbon atoms, a phenyl group, an alkoxy group having from 1 to 6 carbon atoms, or an alkanesulfonyloxy group having from 1 to 6 carbon atoms.)

In the formula (I), the substitution position of the substituent X is preferably an ortho-position or a para-position.

As the substituent X, further preferred is a linear or branched alkyl group having from 1 to 6 carbon atoms, a phenyl group, a linear or branched alkoxy group having from 1 to 6 carbon atoms, or a linear or branched alkanesulfonyloxy group having from 1 to 6 carbon atoms, more preferred is a linear or branched alkyl group having from 1 to 6 carbon atoms, or a linear or branched alkanesulfonyloxy group having from 1 to 6 carbon atoms, and even more preferred is a linear or branched alkanesulfonyloxy group having from 1 to 6 carbon atoms.

The linear or branched alkyl group having from 1 to 6 carbon atoms for the substituent X includes a methyl group, an ethyl group, a propyl group, a butyl group, a pentyl group, a hexyl group, a 2-propyl group, a tert-butyl group, a tert-pentyl group, etc. Of those, preferred are a methyl group, an ethyl group, a tert-butyl group, a tert-pentyl group; and more preferred are a tert-butyl group, a tert-pentyl group.

The linear or branched alkoxy group having from 1 to 6 carbon atoms for the substituent X includes a methoxy group, an ethoxy group, a propoxy group, an isopropoxy group, a butoxy group, etc. Of those, preferred are a methoxy group, an ethoxy group, and more preferred is a methoxy group.

The linear or branched alkanesulfonyloxy group having from 1 to 6 carbon atoms for the substituent X includes a methanesulfonyloxy group, an ethanesulfonyloxy group, a propanesulfonyloxy group, a butanesulfonyloxy group, a pentanesulfonyloxy group, a hexanesulfonyloxy group, etc. Of those, preferred are a methanesulfonyloxy group, an ethanesulfonyloxy group, a propanesulfonyloxy group; and more preferred is a methanesulfonyloxy group.

At least one hydrogen atom of the alkanesulfonyloxy group may be substituted with a fluorine atom. Concretely, the group is preferably a trifluoromethanesulfonyloxy group or a trifluoroethanesulfonyloxy group.

Preferably, the alkylphenol derivative for use in the present invention is represented by the following formula (II) :

[Chemical Formula 2]

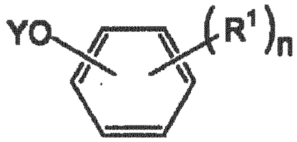

(II)

(In the formula, $R^1$ represents an alkyl group having from 1 to 7 carbon atoms; Y represents an alkyl group having from 1 to 6 carbon atoms, an alkanesulfonyl group having from 1 to 6 carbon atoms, an acyl group having from 2 to 6 carbon atoms, an alkoxycarbonyl group having from 2 to 6 carbon atoms, or a formyl group; n indicates 1 or 2.)

In the formula (II), the substituent Y is preferably a linear or branched alkyl group having from 1 to 6 carbon atoms, or a linear or branched alkanesulfonyl group having from 1 to 6 carbon atoms, and is more preferably a linear or branched alkanesulfonyl group having from 1 to 6 carbon atoms. Preferably, n is 2.

The substitution position of the substituent $R^1$ relative to the substituent -OY is preferably an ortho-position and a para-position.

In the formula (II), the linear or branched alkyl group having from 1 to 7 carbon atoms for the substituent $R^1$ is preferably a methyl group, an ethyl group, a propyl group, a butyl group, a pentyl group, a hexyl group, a 2-propyl group, or a tert-alkyl group represented by the following formula (III) :

[Chemical Formula 3]

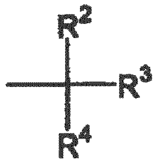

(III)

(In the formula, $R^2$, $R^3$ and $R^4$ each independently represent a methyl group or an ethyl group.)

Of those, more preferred is a tert-alkyl group (in this case, the compound of the formula (II) is a tert-alkylphenyl derivative), and even more preferred is a tert-butyl group or a tert-pentyl group.

In the formula (II), the linear or branched alkyl group having from 1 to 6 carbon atoms for the substituent Y includes a methyl group, an ethyl group, a propyl group, a butyl group, a pentyl group, a hexyl group, a 2-propyl group, a tert-butyl group, etc. Of those, preferred are a methyl group, an ethyl group; and more preferred is a methyl group.

The linear or branched alkanesulfonyl group having from 1 to 6 carbon atoms for the substituent Y includes a methanesulfonyl group, an ethanesulfonyl group, a propanesulfonyl group, a butanesulfonyl group, a pentanesulfonyl group, a hexanesulfonyl group, etc. Of those, preferred are a methanesulfonyl group, an ethanesulfonyl group, a propanesulfonyl group; and more preferred is a methanesulfonyl group.

At least one hydrogen atom of the alkanesulfonyl group may be substituted with a fluorine atom. Concretely, the group is preferably a trifluoromethanesulfonyl group or a trifluoroethanesulfonyl group.

The linear or branched acyl group having from 2 to 6 carbon atoms for the substituent Y includes an acetyl group, a propionyl group, a butyryl group, an isobutyryl group, a pivaloyl group, etc. Of those, preferred are an acetyl group, a propionyl group; and more preferred is an acetyl group.

The linear or branched alkoxycarbonyl group having from 2 to 6 carbon atoms for the substituent Y includes a methoxycarbonyl group, an ethoxycarbonyl group, a propoxycarbonyl group, an isopropoxycarbonyl group, a butoxycarbonyl group, etc. Of those, preferred is a methoxycarbonyl group, an ethoxycarbonyl group; and more preferred is a methoxycarbonyl group.

In the formulae (I), (II), (III), when the substituents are within the above-mentioned ranges, then the compounds are preferred as more effective for increasing the recovery rate after low-temperature cycles of the battery after exposure thereof to high temperatures.

Preferred examples of the biphenyl derivative in the present invention include biphenyl, ortho-terphenyl, meta-terphenyl, para-terphenyl, 2-methylbiphenyl, 3-methylbiphenyl, 4-methylbiphenyl, 2-ethylbiphenyl, 3-ethylbiphenyl, 4-ethylbiphenyl, 2-tert-butylbiphenyl, 3-tert-butylbiphenyl, 4-tert-butylbiphenyl, 2-methoxybiphenyl, 3-methoxybiphenyl, 4-methoxybiphenyl, 2-(methylsulfonyloxy)biphenyl, 3-(methylsulfonyloxy)biphenyl, 4- (methylsulfonyloxy) biphenyl, etc. Of those, preferred is at least one selected from biphenyl, ortho-terphenyl, 4-methylbiphenyl, 4-ethylbiphenyl, 4-tert-butylbiphenyl, 4-methoxybiphenyl and 4-methanesulfonyloxybiphenyl; more preferred is at least one selected from ortho-terphenyl, 4-methylbiphenyl, 4-ethylbiphenyl, 4-tert-butylbiphenyl, 4-methoxybiphenyl and 4-(methylsulfonyloxy) biphenyl; and even more preferred are 4-tert-butylbiphenyl and/or 4-(methylsulfonyloxy)biphenyl.

Preferred examples of the alkylphenol derivative in the present invention include 2-tert-butylanisole, 3-tert-butylanisole, 4-tert-butylanisole, 2-tert-pentylanisole, 3-tert-pentylanisole, 4-tert-pentylanisole, 2,3-di-tert-butylanisole, 2,4-di-tert-butylanisole, 2,5-di-tert-butylanisole, 2,6-di-tert-butylanisole, 3,4-di-tert-butylanisole, 3,5-di-tert-butylanisole, 2-tert-butylphenyl methanesulfonate, 3-tert-butylphenyl methanesulfonate, 4-tert-butylphenyl methanesulfonate, 2-tert-pentylphenyl methanesulfonate, 3-tert-pentylphenyl methanesulfonate, 4-tert-pentylphenyl methanesulfonate, 2,3-di-tert-butylphenyl methanesulfonate, 2,4-di-tert-butylphenyl methanesulfonate, 2,5-di-tert-butylphenyl methanesulfonate, 2,6-di-tert-butylphenyl methanesulfonate, 3,4-di-tert-butylphenyl methanesulfonate, 3,5-di-tert-butylphenyl methanesulfonate, etc. Of those, preferred is at least one selected from 4-tert-butylanisole, 4-tert-pentylanisole, 2,4-di-tert-butylanisole, 2,6-di-tert-butylanisole, 4-tert-butylphenyl methanesulfonate, 4-tert-pentylphenyl methanesulfonate, 2,4-di-tert-butylphenyl methanesulfonate, and 2,6-di-tert-butylphenyl methanesulfonate; more preferred is at least one selected from 4-tert-butylphenyl methanesulfonate, 2,4-di-tert-butylphenyl methanesulfonate, and 2,6-di-tert-butylphenyl methanesulfonate; and even more preferred is at least one selected from 4-tert-butylphenyl methanesulfonate, 4-tert-pentylphenyl methanesulfonate, and 2,4-di-tert-butylphenyl methanesulfonate.

In the nonaqueous electrolytic solution of the present invention, when the content of 1,2,3,4-tetrahydronaphthalene is more than 5% by mass, then the compound may be excessively oxidized and decomposed on the positive electrode so that the positive electrode may be greatly deteriorated; but on the other hand, when the content is less than 0.1% by mass, then the electrolytic solution could not be sufficiently effective for increasing the recovery rate after low-temperature cycles after the battery has been exposed to high temperatures. Accordingly, the lower limit of the content of the compound is preferably at least 0.1% by mass relative to the mass of the nonaqueous electrolytic solution, more preferably at least 0.7% by mass, even more preferably at least 1% by mass. The upper limit of the content is preferably at most 5% by mass, more preferably at most 4% by mass, even more preferably at most 3% by mass.

When the content of the biphenyl derivative and/or the alkylphenol derivative is more than 5% by mass, then the derivative (s) may be excessively oxidized and decomposed on the positive electrode to thereby increase the resistance of the positive electrode; but on the other hand, when the content is less than 0.1% by mass, then the electrolytic solution could not be sufficiently effective for increasing the recovery rate after low-temperature cycles after the battery has been exposed to high temperatures. Accordingly, the lower limit of the content of the compound(s) is preferably at least 0.1% by mass relative to the mass of the nonaqueous electrolytic solution, more preferably at least 0.5% by mass, even more preferably at least 0.7% by mass, most preferably at least 1% by mass. The upper limit of the content is

preferably at most 5% by mass, more preferably at most 4% by mass, even more preferably at most 3% by mass.

Regarding the ratio of the content of the biphenyl derivative and/or the alkylphenol derivative to that of 1,2,3,4-tetrahydronaphthalene, the lower limit of the ratio is preferably at most 0.1, more preferably at most 0.2, because, when the oxidative decomposition of 1,2,3,4-tetrahydronaphthalene is prevented from being excessively retarded, the electrolytic solution could be more effective for increasing the recovery rate after low-temperature cycles after the battery has been exposed to high temperatures. The upper limit of the ratio is preferably at most 1, more preferably at most 0.5.

The nonaqueous electrolytic solution of the present invention can be effective for increasing the recovery rate after low-temperature cycles of the battery after exposure thereof to high temperatures even though the electrolytic solution contains 1,2,3,4-tetrahydronaphthalene, and a biphenyl derivative and/or an alkylphenol derivative alone; however, when combined with a nonaqueous solvent, an electrolyte salt and other additives to be mentioned below, the above-mentioned effect of the electrolytic solution could be synergistically enhanced. Though not always clear, the reason would be because a mixed surface film having high ionic conductivity could be formed, containing the constitutive elements of 1,2,3,4-tetrahydronaphthalene, and the biphenyl derivative and/or the alkylphenol derivative, as combined with the nonaqueous solvent, the electrolyte salt and other additives.

[Nonaqueous Solvent]

The nonaqueous solvent for use in the nonaqueous electrolytic solution of the present invention includes cyclic carbonates, linear carbonates, linear esters, ethers, amides, phosphates, sulfones, lactones, nitriles, S=O bond-containing compounds, carboxylic acid anhydrides, aromatic compounds, etc.

The cyclic carbonates include ethylene carbonate (EC), propylene carbonate (PC), butylene carbonate (BC), 4-fluoro-1,3-dioxolan-2-one (FEC), trans or cis-4,5-difluoro-1,3-dioxolan-2-one (hereinafter, the two are collectively referred to as "DFEC"), vinylene carbonate (VC), vinylethylene carbonate (VEC), etc. Of those, preferred is use of at least one cyclic carbonate having a carbon-carbon double bond or a fluorine atom, since the recovery rate after low-temperature cycles of the battery after exposure thereof to high temperatures can be increased further more; and more preferred is use of both a cyclic carbonate containing a carbon-carbon double bond and a cyclic carbonate containing a fluorine atom. As the carbon-carbon double bond-containing cyclic carbonate, preferred are VC and VEC; and as the fluorine-containing cyclic carbonate, preferred are FEC and DFEC.

One kind of those solvents may be used, but using two or more different kinds as combined is preferred as further increasing the recovery rate after low-temperature cycles of the battery after exposure thereof to high temperatures. Even more preferably, three or more different kinds are combined. Preferred combinations of the cyclic carbonates include EC and PC; EC and VC; PC and VC; FEC and VC; FEC and EC; FEC and PC; FEC and DFEC; DFEC and EC; DFEC and PC; DFEC and VC; DFEC and VEC; EC and PC and VC; EC and FEC and PC; EC and FEC and VC; EC and VC and VEC; FEC and PC and VC; DFEC and EC and VC; DFEC and PC and VC; FEC and EC and PC and VC; DFEC and EC and PC and VC, etc. Of those combinations, more preferred combinations are EC and VC; FEC and PC; DFEC and PC; EC and FEC and PC; EC and FEC and VC; EC and VC and VEC, etc.

Not specifically defined, the content of the cyclic carbonate is preferably within a range of from 10 to 40% by volume relative to the total volume of the nonaqueous solvent. When the content is less than 10% by volume, then the electric conductivity of the electrolytic solution may lower, and the internal resistance of the battery may increase; but when more than 40% by volume, then the recovery rate after low-temperature cycles of the battery after exposure thereof to high temperatures may lower. Consequently, the content preferably falls within the above-mentioned range.

The linear carbonates include asymmetric linear carbonates such as methyl ethyl carbonate (MEC), methyl propyl carbonate (MPC), methyl isopropyl carbonate (MIPC), methyl butylcarbonate, ethyl propyl carbonate, etc.; symmetric linear carbonates such as dimethyl carbonate (DMC), diethyl carbonate (DEC), dipropyl carbonate, dibutyl carbonate, etc.

Of those, the nonaqueous electrolytic solution preferably contains a linear carbonate having a methyl group, more preferably at least one of DMC, MEC, MPC, MIPC, even more preferably at least one of DMC and MEC. Also preferably, the nonaqueous electrolytic solution contains both an asymmetric linear carbonate and a symmetric linear carbonate as combined. Preferably, the proportion of the asymmetric linear carbonate in the linear carbonate is at least 50% by volume.

Although one kind of those linear carbonates may be used, two or more kinds of them are preferably used in combination.

The combination and the composition of the linear carbonates falling within the above-mentioned ranges are preferred, since the recovery rate after low-temperature cycles of the battery after exposure thereof to high temperatures can be increased more.

Not specifically defined, the content of the linear carbonate is preferably within a range of from 60 to 90% by volume relative to the total volume of the nonaqueous solvent. When the content is less than 60% by volume, then the viscosity of the electrolytic solution may increase; but when more than 90% by volume, then the electric conductivity of

the electrolytic solution may lower and the battery characteristics such as cycle properties and others may worsen. Accordingly, the above range is preferred.

A ratio (volume ratio) "cyclic carbonates:linear carbonates" between the cyclic carbonates and the linear carbonates is preferably from 10:90 to 40:60, more preferably from 15:85 to 35:65, and particularly preferably from 20:80 to 30:70 from the viewpoints of increasing the recovery rate after low-temperature cycles of the battery after exposure thereof to high temperatures.

As the other nonaqueous solvents, preferably mentioned are linear esters such as methyl propionate, methyl pivalate, butyl pivalate, hexyl pivalate, octyl pivalate, dimethyl oxalate, ethyl methyl oxalate, diethyl oxalate, etc; cyclic ethers such as tetrahydrofuran, 2-methyltetrahydrofuran, 1,3-dioxolane, 1,3-dioxane, 1,4-dioxane, etc.; linear ethers such as 1,2-dimethoxyethane, 1,2-diethoxyethane, 1,2-dibutoxyethane, etc.; amides such as dimethylformamide, etc.; phosphates such as trimethyl phosphate, tributyl phosphate, trioctyl phosphate, etc. ; sulfones such as sulfolane, etc.; lactones such as $\gamma$-butyrolactone, $\gamma$-valerolactone, $\alpha$-angelicalactone, etc.; nitriles such as acetonitrile, propionitrile, succinonitrile, glutaronitrile, adiponitrile, etc; sultone compounds such as 1,3-butanesultone, 1,4-butanesultone, etc.; cyclic sulfite compounds such as ethylene sulfite, hexahydrobenzo[1,3,2]dioxathiolane-2-oxide (also referred to as 1,2-cyclohexanediol cyclic sulfite), 5-vinyl-hexahydro-1,3,2-benzodioxathiol-2-oxide, etc.; sulfonate compounds such as 1,2-ethanediol dimethanesulfonate, 1,2-propanediol dimethanesulfonate, 1,3-propanediol dimethanesulfonate, 1,4-butanediol dimethanesulfonate, 2-propynyl methanesulfonate, etc.; S=O bond-containing compounds selected from vinylsulfone compounds such as divinyl sulfone, 1,2-bis(vinylsulfonyl)ethane, bis (2-vinylsulfonylethyl) ether, etc.; linear carboxylic acid anhydrides such as acetic anhydride, propionic anhydride, etc.; cyclic carboxylic acid anhydrides such as succinic anhydride, maleic anhydride, glutaric anhydride, itaconic anhydride, etc.; cyclohexylbenzene, fluorocyclohexylbenzene compounds (1-fluoro-2-cyclohexylbenzene, 1-fluoro-3-cyclohexylbenzene, 1-fluoro-4-cyclohexylbenzene); branched alkyl group-having aromatic compounds such as tert-butylbenzene, tert-amylbenzene, 1-fluoro-4-tert-butylbenzene, etc.; aromatic compounds such as diphenyl ether, fluorobenzene, difluorobenzene (o-, m-, p-forms), 2,4-difluoroanisole, partially hydrogenated terphenyls (1,2-dicyclohexylbenzene, 2-phenylbicyclohexyl, 1,2-diphenylcyclohexane), etc.

Of the above-mentioned nonaqueous solvents, especially preferred is use of at lest one selected from S=O bond-containing compounds, since the recovery rate after low-temperature cycles of the battery after exposure thereof to high temperatures can be increased more. As the S=O bond-containing compounds, preferred are cyclic sulfite compounds and sulfonate compounds. Among them, more preferred is use of at least one compound selected from ethylene sulfite and 2-propynyl methanesulfonate. When the amount these compounds combined is more than 5% by mass, then the recovery rate after low-temperature cycles of the battery after exposure thereof to high temperatures may lower; but on the other hand, when less than 0.05% by mass, the electrolytic solution could not be sufficiently effective for enhancing the characteristics. Accordingly, the content is preferably at least 0.05% by mass of the nonaqueous electrolytic solution, more preferably at least 0.5% by mass. The upper limit of the content is preferably at most 5% by mass, more preferably at most 3% by mass.

In general, the nonaqueous solvents are used as a mixture thereof for attaining the suitable physical properties. Regarding their combinations, for example, there are mentioned a combination of a cyclic carbonate and a linear carbonate, a combination of a cyclic carbonate, a linear carbonate and a lactone, a combination of a cyclic carbonate, a linear carbonate and a linear ester, a combination of a cyclic carbonate, a linear carbonate and an ether, a combination of a cyclic carbonate, a linear carbonate and an S=O bond-containing compound, etc.

Of those, preferred is using a nonaqueous solvent of a combination of at least a cyclic carbonate and a linear carbonate, as increasing the recovery rate after low-temperature cycles of the battery after exposure thereof to high temperatures. More specifically, a combination of one or more kinds of cyclic carbonates selected from EC, PC, VC, VEC, FEC and DFEC, and one or more kinds of linear carbonates selected from DMC, MEC and DEC is preferred.

[Electrolyte Salt]

The electrolyte salt for use in the present invention includes Li salts such as $LiPF_6$, $LiBF_4$, $LiClO_4$, $LiN(SO_2F)_2$, etc.; linear fluoroalkyl group-containing lithium salts such as $LiN(SO_2CF_3)_2$, $LiN(SO_2C_2F_5)_2$, $LiCF_3SO_3$, $LiC(SO_2CF_3)_3$, $LiPF_4(CF_3)_2$, $LiPF_3(C_2F_5)_3$, $LiPF_3(CF_3)_3$, $LiPF_3(iso\text{-}C_3F_7)_3$, $LiPF_5(iso\text{-}C_3F_7)$, etc.; cyclic fluoroalkylene chain-containing lithium salts such as $(CF_2)_2(SO_2)_2NLi$, $(CF_2)_3(SO_2)_2NLi$, etc. ; and lithium salts with an anion of an oxalate complex such as lithium bis[oxalate-O,O']borate, lithium difluoro[oxalate-O,O']borate, etc. Of those, especially preferred is at least one electrolyte salt selected from $LiPF_6$, $LiBF_4$, $LiN(SO_2CF_3)_2$, and $LiN(SO_2C_2F_5)_2$. One or more of these electrolyte salts may be used herein either singly or as combined.

A preferred combination of these electrolyte salts is a combination containing $LiPF_6$ and further containing a lithium salt that contains a nitrogen atom or a boron atom. As the lithium salt that contains a nitrogen atom or a boron atom, at least one kind selected from $LiBF_4$, $LiN(SO_2CF_3)_2$ and $LiN(SO_2C_2F_5)_2$ is preferred. Even more preferred combinations include a combination of $LiPF_6$ and $LiBF_4$; a combination of $LiPF_6$ and $LiN(SO_2CF_3)_2$; a combination of $LiPF_6$ and $LiN(SO_2C_2F_5)_2$, etc. When the molar ratio $LiPF_6$: [$LiBF_4$ or $LiN(SO_2CF_3)_2$ or $LiN(SO_2C_2F_5)_2$] is smaller than

70:30 in point of the proportion of $LiPF_6$, or when the ratio is larger than 99 :1 in point of the proportion of $LiPF_6$, then the effect of increasing the recovery rate after low-temperature cycles of the battery after exposure thereof to high temperatures may lower. Accordingly, the molar ratio $LiPF_6$: [$LiBF_4$ or $LiN(SO_2CF_3)_2$ or $LiN(SO_2C_2F_5)_2$] is preferably within a range of from 70:30 to 99:1, more preferably from 80: 20 to 98:2. The combination falling within the above range is more effective for further increasing the recovery rate after low-temperature cycles of the battery after exposure thereof to high temperatures.

The electrolyte salts can each be mixed at an arbitrary ratio. However, when a ratio (by mol) of the other electrolyte salts except $LiBF_4$, $LiN(SO_2CF_3)_2$ and $LiN(SO_2C_2F_5)_2$ to all the electrolyte salts in the case where $LiPF_6$ is used in combination with those ingredients is less than 0.01%, then the effect of increasing the recovery rate after low-temperature cycles of the battery after exposure thereof may be poor; but when more than 45%, the recovery rate after low-temperature cycles of the battery after exposure thereof may lower. Therefore, the ratio (by mol) is preferably from 0.01 to 45%, more preferably from 0.03 to 20%, still more preferably from 0.05 to 10%, and most preferably from 0.05 to 5%.

The concentration of all these electrolyte salts as dissolved in the solution is generally preferably at least 0.3 M relative to the above-mentioned nonaqueous solvent, more preferably at least 0.5 M, most preferably at least 0.7 M. The upper limit of the concentration is preferably at most 2.5 M, more preferably at most 2.0 M, even more preferably at most 1.5 M, most preferably at most 1.2 M.

[Production of Nonaqueous Electrolytic Solution]

The nonaqueous electrolytic solution of the present invention can be prepared, for example, by: mixing the nonaqueous solvents; adding the electrolyte salt to the mixture; and adding thereto from 0.1 to 5% by mass of 1,2,3,4-tetrahydronaphthalene and further adding thereto from 0.1 to 5% by mass of a biphenyl derivative and/or an alkylphenol derivative.

In this case, the nonaqueous solvent to be used, and the compounds to be added to the nonaqueous electrolytic solution are preferably previously purified within a range not significantly detracting from the producibility, in which, therefore, the impurity content is preferably as low as possible.

In the nonaqueous electrolytic solution of the present invention, usable is not only a liquid one but also a gelled one as the nonaqueous electrolyte. Further in the nonaqueous electrolytic solution of the present invention, also usable is a solid polymer electrolyte.

In the nonaqueous electrolytic solution of the present invention, for example, air and carbon dioxide may be contained.

As the method for introducing (dissolving) air or carbon dioxide in the nonaqueous electrolytic solution, there may be employed (1) a method of bringing the nonaqueous electrolytic solution into contact with air or carbon dioxide-containing gas before the solution is injected into a battery, or (2) a method of introducing air or carbon dioxide-containing gas into a battery after the electrolytic solution has been injected thereinto and before or after the battery is sealed up.

Preferably, the air or the carbon dioxide-containing gas contains water as little as possible and has a dew point of not higher than -40°C, more preferably not higher than -50°C.

In the present invention, using the electrolytic solution with carbon dioxide dissolved therein is especially preferred. The lower limit of the amount of the carbon dioxide dissolved in the nonaqueous electrolytic solution is preferably at least 0.01% by weight of solution, more preferably at least 0.1% by weight, and the upper limit thereof is preferably at most 0.5% by weight, more preferably at most 0.4% by weight.

[Lithium Secondary Battery]

The lithium secondary battery of the present invention comprises a positive electrode containing, as the positive electrode active material, a lithium-containing metal oxide that contains at least one metal element selected from nickel, manganese and iron, a negative electrode containing, as the negative electrode active material, a carbon material capable of absorbing and releasing lithium, and a nonaqueous electrolytic solution of an electrolyte salt dissolved in a nonaqueous solvent, wherein the nonaqueous electrolytic solution contains from 0.1 to 5% by mass of 1,2,3,4-tetrahydronaphthalene, and from 0.1 to 5% by mass of a biphenyl derivative and/or an alkylphenol derivative.

As the positive electrode active material, used here is a lithium-containing metal oxide that contains at least one metal element selected from nickel, manganese and iron. One or more different kinds of such positive electrode active materials may be sued here either singly or as combined.

As the lithium-containing metal oxide, preferred is a lithium-containing transition metal compound that contains at least one metal element of nickel and manganese, or an olivine-type lithium phosphate that contains at least one metal element of nickel, manganese and iron. Above all, more preferred is an olivine-type lithium phosphate that contains at least one metal element of nickel, manganese and iron, since the recovery rate after low-temperature cycles of the battery after exposure thereof to high temperatures can be further increased.

(Lithium-Containing Transition Metal Compound)

For example, as the lithium-containing transition metal compound that contains at least one metal element of nickel and manganese, preferred are $LiMn_2O_4$, $LiNiO_2$, $LiCo_{1-x}Ni_xO_2$ (0.5<x<1), $LiCo_xNi_yMn_zO_2$ (x+y+z=1, 0≤x<0.5), $LiNi_xMn_{2-x}O_4$ (0.1<x<0.6), etc.

Preferably, a part of the lithium-containing transition metal compound that contains at least one metal element of nickel and manganese is substituted with any other element, since the compound of the type is more effective for increasing the recovery rate after low-temperature cycles of the battery after exposure thereof to high temperatures. For example, a part of manganese and nickel in the compound may be substituted with at least one element of Sn, Mg, Fe, Ti, Al, Zr, Cr, V, Ga, Zn, Cu, Bi, Mo, La, etc. ; or a part of O may be substituted with S or F; or the compound may be coated with a compound containing any of such other elements. The proportion of the other element to be substituted for a part of manganese and nickel is preferably at least 0.01 mol% of all the metal elements except lithium, more preferably at least 0.1 mol%; and the upper limit thereof is preferably at most 5 mol%, more preferably at most 3 mol%. The proportion of S and F to be substituted for a part of O is preferably at least 0.01 mol% relative to O more preferably at least 0.02 mol%, and the upper limit thereof is preferably at most 1 mol%, more preferably at most 0.5 mol%.

As the case may be, a combination of $LiMn_2O_4$ and $LiNiO_2LiMn_2O_4$ and $LiCo_xNi_yMn_zO_2$ (x+y+z=1, 0≤x<0.5) is employable here.

(Olivine-Type Lithium Phosphate)

As the olivine-type lithium phosphate that contains at least one metal element selected from nickel, manganese and iron, preferred are $LiFePO_4$, $LiNiPO_4$, $LiMnPO_4$, $LiFe_{1-x}Mn_xPO_4$ (0.1<x<0.9), etc. Of those, more preferred are $LiFePO_4$ and $LiMnPO_4$, and even more preferred is $LiFePO_4$.

A part of the lithium-containing olivine-type phosphate may be substituted with any other element; and a part of nickel, manganese and iron may be substituted with at least one element selected from Co, Mn, Ni, Mg, Al, B, Ti, V, Nb, Cu, Zn, Mo, Ca, Sr, W, Zr, etc.; or the compound may be substituted with a compound containing any of those other elements or with a carbon material.

The proportion of the other element to be substituted for a part of nickel, manganese and iron is preferably at least 0.01 mol% of all the metal elements except lithium, more preferably at least 0.1 mol%, and the upper limit thereof is preferably at most 5 mol%, more preferably at most 3 mol%. The proportion of S and F to be substituted for a part of 0 is preferably at least 0.01 mol% relative to oxygen, more preferably at least 0.02 mol%, and the upper limit thereof is preferably at most 1 mol%, more preferably at most 0.5 mol%.

The lithium-containing olivine-type phosphate may be used here, for example, as mixed with the above-mentioned positive electrode active material.

Using the positive electrode active material having the composition mentioned above is preferred as more effective for further increasing the recovery rate after low-temperature cycles of the battery after exposure thereof to high temperatures.

Not specifically defined, the electroconductive agent of the positive electrode may be any electron-conductive material not undergoing chemical change. For example, it includes graphites such as natural graphite (flaky graphite, etc.), artificial graphite, etc.; carbon blacks such as acetylene black, Ketj en black, channel black, furnace black, lamp black, thermal black, etc. Graphites and carbon blacks may be combined suitably. The amount of the electroconductive agent to be added to the positive electrode mixture is preferably from 1 to 10% by mass, more preferably from 2 to 5% by mass.

The positive electrode may be formed by mixing the above-mentioned positive electrode active material with an electroconductive agent such as acetylene black, carbon black or the like, and with a binder such as polytetrafluoroethylene (PTFE), polyvinylidene fluoride (PVDF), styrene/butadiene copolymer (SBR), acrylonitrile/butadiene copolymer (NBR), carboxymethyl cellulose (CMC), ethylene/propylene/diene terpolymer or the like, then adding thereto a high-boiling point solvent such as 1-methyl-2-pyrrolidone or the like, and kneading them to give a positive electrode mixture, thereafter applying the positive electrode mixture onto an aluminium foil or a stainless lath plate or the like serving as a collector, and drying and shaping it under pressure, and then heat-treating it in vacuum at a temperature of from 50°C to 250°C or so for about 2 hours.

The density of the part except the collector of the positive electrode may be generally at least 1.5 $g/cm^3$, and for further increasing the capacity of the battery, the density is preferably at least 2 $g/cm^3$, more preferably at least 3 $g/cm^3$, even more preferably at least 3.6 $g/cm^3$. The upper limit is preferably at most 4 $g/cm^3$.

As the negative electrode active material, usable here is a carbon material capable of absorbing and releasing lithium. One alone or two or more different kinds of negative electrode active materials may be used here either singly or as combined.

As the carbon material capable of absorbing and releasing lithium, preferred are graphitizable carbon, hardly-graphitizable carbon having a (002) plane spacing of 0.37 nm or more, and graphite having a (002) plane spacing of 0.34 nm or less.

Of those, more preferred is use of a high-crystalline carbon material such as artificial graphite or natural graphite in view of the ability thereof to absorb and release lithium ions, and even more preferred is use of a carbon material having a graphite crystal structure where the lattice (002) spacing ($d_{002}$) is at most 0.340 nm (nanometers), especially from 0.335 to 0.337 nm.

When artificial graphite particles having a bulky structure where plural flattened graphite fine particles aggregate or bond together non-parallel to each other, or graphite particles produced through treatment of spheronization comprising repeatedly imparting mechanical action such as compression force, friction force, shear force or the like to, for example, flaky natural graphite particles are used, and when the ratio of the peak intensity I (110) of the (110) plane of the graphite crystal obtained in X-ray diffractiometry of a negative electrode sheet as formed by pressing so that the density of the part except the collector of the negative electrode could be 1.5 g/cm$^3$, to the peak intensity I (004) of the (004) plane thereof, I (110) /I (004) is at least 0.01, then the metal ions released from the positive electrode may clog the Li ion absorption and release sites in the surface of the graphite particles whereby the recovery rate after low-temperature cycles of the battery after exposure thereof to high temperatures may tend to lower; however, when the electrolytic solution of the present invention is used, the above-mentioned effect can be remarkably enhanced, and therefore use of the electrolytic solution of the present invention is favorable in this point. More preferably, the ratio is at least 0.05, even more preferably at least 0.1. On the other hand, when too much processed, the crystallinity may worsen and the discharge capacity of the battery may lower; and therefore, the upper limit is preferably at most 0.5, more preferably at most 0.3.

Preferably, the high-crystalline carbon material to be used here is coated with a low-crystalline carbon material, as increasing the recovery rate after low-temperature cycles of the battery after exposure thereof to high temperatures. When a high-crystalline carbon material is used, it may readily react with a nonaqueous electrolytic solution in charging thereby facilitating deposition of lithium metal on the negative electrode, and therefore, the recovery rate after low-temperature cycles of the battery after exposure thereof to high temperatures may lower; however, the characteristics of the lithium secondary battery of the present invention are bettered.

The negative electrode may be formed, using the same electroconductive agent, binder and high-boiling point solvent as in the formation of the above-mentioned positive electrode. These are mixed and kneaded to give a negative electrode mixture, then the negative electrode mixture is applied onto a copper foil or the like serving as a collector, then dried and shaped under pressure, and thereafter heat-treated in vacuum at a temperature of from 50°C to 250°C or so for about 2 hours.

The density of the part except the collector of the negative electrode may be generally at least 1.1 g/cm$^3$, and for further increasing the capacity of the battery, the density is preferably at least 1.5 g/cm$^3$, more preferably at least 1.7 g/ cm3 .

For the separator for the battery, usable is a single-layer or laminate porous film of polyolefin such as polypropylene, polyethylene or the like, as well as a woven fabric, a nonwoven fabric, etc.

The structure of the lithium secondary battery is not specifically defined. The battery may be a coin-shaped battery, a cylindrical battery, a square-shaped battery, or a laminate-type battery, each having a single-layered or multilayered separator.

The lithium secondary battery of the present invention is excellent in the recovery rate after low-temperature cycles of the battery after exposure thereof to high temperatures, when the charging final voltage is 4.2 V or less, more preferably 4.1 V or less. The discharging final voltage of the battery could be 2.5 V or more, and further could be 2.8 V or more. The current value is not specifically defined. In general, the battery is used at a current discharge of from 0.1 to 20 C. The lithium secondary battery of the present invention can be charged/discharged at -40 to 100°C, preferably at 0 to 80°C.

In the present invention, as a countermeasure against the increase in the internal pressure of the lithium secondary battery, there may be employed a method of providing a safety valve in the battery cap or a method of forming a cutout in the battery component such as the battery can, the gasket or the like. In addition, as a safety countermeasure against overcharging, a current breaker capable of detecting the internal pressure of the battery to cut off the current may be provided in the battery cap.

## EXAMPLES

Examples of the present invention are shown below; however, the present invention is not limited to these Examples. Examples 1 to 18, Comparative Examples 1 to 3:

[Production of lithium ion secondary battery]

94 Percent by mass of $LiNi_{1/3}Mn_{1/3}Co_{1/3}O_2$ (positive electrode active material) and 3% by mass of acetylene black (electroconductive agent) were mixed. The mixture was added to and mixed with a solution previously prepared by dissolving 3% by mass of polyvinylidene fluoride (binder) in 1-methyl-2-pyrrolidone. Thus, a positive electrode mixture paste was prepared. The positive electrode mixture paste was applied to one surface of an aluminum foil (collector), dried, processed under pressure, and cut into a predetermined size. Thus, a positive electrode sheet was produced. The density of a part of the positive electrode except the collector was 3.6 g/cm$^3$. In addition, 95% by mass of artificial graphite ($d_{002}$=0.335 nm, negative electrode active material) coated with low-crystalline carbon material was added to and mixed with a solution previously prepared by dissolving 5% by mass of polyvinylidene fluoride (binder) in 1-methyl-2-pyrrolidone. Thus, a negative electrode mixture paste was prepared. The negative electrode mixture paste was applied to one surface of a copper foil (collector), dried, processed under pressure, and cut into a predetermined size. Thus, a negative electrode sheet was produced. The density of a part of the negative electrode except the collector was 1.5 g/cm$^3$. Analyzed through X-ray diffractiometry, 1 (110)/I (004) of the electrode sheet was 0.1. The positive electrode sheet, a porous polyethylene film separator and the negative electrode sheet were laminated in that order, and a solution prepared by dissolving 0.4% by weight of carbon dioxide in the nonaqueous electrolytic solution having the composition shown in Table 1 was added thereto to construct a 2032-type coin battery.

[Evaluation for low-temperature cycle properties after high-temperature storage]

(1) Initial discharge capacity:

The battery produced according to the above-mentioned method was charged in a thermostatic chamber at 25°C up to 4.1 V (charging final voltage) at a constant current of 1 C, then charged for 2.5 hours at the constant voltage of 4.1V, and discharged down to 2.75 V (discharging final voltage) at a constant current of 1 C, and the initial discharge capacity of the battery was thus determined.

(2) High-temperature storage test:

Next, the battery was charged in a thermostatic chamber at 25°C up to 4.1 V at a constant current of 1 C, then charged for 2.5 hours at the constant voltage of 4.1V, and thereafter left in an open circuit in a thermostatic chamber at 80°C.

(3) Low-temperature cycle test:

Further, the battery was charged in a thermostatic chamber at 0°C up to 4.1 V at a constant current of 1 C, then charged for 2.5 hours at the constant voltage of 4.1V, and discharged down to a final voltage of 2.75 V at a constant current of 1 C. This was repeated up to 50 cycles.

(4) Discharge capacity recovery rate after low-temperature cycle test:

Finally, the battery was charged in a thermostatic chamber at 25°C up to 4.1 V at a constant current of 1 C, then charged for 2.5 hours at the constant voltage of 4.1V, and discharged down to a final voltage of 2.75 V at a constant current of 1 C, and the discharge capacity of the battery after the low-temperature cycle test was thus determined.

With that, the discharge capacity recovery rate (%) of the battery after the low-temperature cycle test was determined according to the following formula:

Discharge Capacity Recovery Rate (%) after low-temperature cycle test = (discharge capacity after low-temperature cycle test/initial discharge capacity) × 100

The condition in producing the batteries and the battery characteristics are shown in Table 1.

[Table 1]

| | Composition of Electrolyte Salt Composition of Nonaqueous Electrolytic Solution (ratio by volume of solvents) | Amount added of 1,2,3,4-Tetrahydro-naphthalene (wt.%) | Biphenyl Derivative or Alkylphenol Derivative | Amount Added of Biphenyl Derivative or Alkylphenol Derivative (wt.%) | Ratio of Amount Added of (Biphenyl Derivative or Alkylphenol Derivative/ 1,2,3,4-Tetrahydronaphthalene) | Discharge Capacity Recovery Rate after low-temperature cycle test (%) |
|---|---|---|---|---|---|---|
| Example 1 | 1M LiPF6 EC/VC/MEC/DMC (28/2/40/30) | 4 | ortho-terphenyl | 0.5 | 0.125 | 81 |
| Example 2 | 1M LiPF6 EC/VC/MEC/DMC (28/2/40/30) | 2 | ortho-terphenyl | 0.5 | 0.25 | 82 |
| Example 3 | 1M LiPF6 EC/VC/MEC/DMC (28/2/40/30) | 0.5 | ortho-terphenyl | 0.5 | 1 | 79 |
| Example 4 | 1M LiPF6 EC/VC/MEC/DMC (28/2/40/30) | 0.5 | ortho-terphenyl | 2 | 4 | 76 |
| Example 5 | 1M LiPF6 EC/VC/MEC/DMC (28/2/40/30) | 0.5 | ortho-terphenyl | 4 | 8 | 74 |
| Example 6 | 1M LiPF6 EC/VC/MEC/DMC (28/2/40/30) | 2 | ortho-terphenyl | 2 | 1 | 80 |
| Example 7 | 1M LiPF6 EC/VC/MEC/DMC (28/2/40/30) | 2 | biphenyl | 2 | 1 | 77 |
| Example 8 | 1M LiPF6 EC/VC/MEC/DMC (28/2/40/30) | 2 | 4-tert-butyl-biphenyl | 2 | 1 | 81 |
| Example 9 | 1M LiPF6 EC/VC/MEC/DMC (28/2/40/30) | 2 | 4-(methylsulfonyl-oxy)biphenyl | 2 | 1 | 82 |
| Example 10 | 1M LiPF6 EC/VC/MEC/DMC (28/2/40/30) | 2 | 4-tert-butylphenyl methanesulfonate | 2 | 1 | 83 |
| Example 11 | 1M LiPF6 EC/VC/MEC/DMC (28/2/40/30) | 2 | 2,4-di-tert-butylphenyl | 2 | 1 | 84 |
| Example 12 | 1M LiPF6 EC/VC/MEC/DMC (28/2/40/30) | 2 | 4-tert-butylanisole | 2 | 1 | 76 |
| Example 13 | 1M LiPF6 EC/FEC/MEC/DMC (28/2/40/30) | 2 | ortho-terphenyl | 2 | 1 | 81 |

(continued)

| | Composition of Electrolyte Salt Composition of Nonaqueous Electrolytic Solution (ratio by volume of solvents) | Amount added of 1,2,3,4-Tetrahydro-naphthalene (wt.%) | Biphenyl Derivative or Alkylphenol Derivative | Amount Added of Biphenyl Derivative or Alkylphenol Derivative (wt.%) | Ratio of Amount Added of (Biphenyl Derivative or Alkylphenol Derivative/ 1,2,3,4-Tetrahydronaphthalene) | Discharge Capacity Recovery Rate after low-temperature cycle test (%) |
|---|---|---|---|---|---|---|
| Example 14 | 1M LiPF6 EC/VC/VEC/MEC/DMC (28/1/1/40/30) | 2 | ortho-terphenyl | 2 | 1 | 82 |
| Example 15 | 1M LiPF6 EC/VC/FEC/MEC/DMC (28/1/1/40/30) | 2 | ortho-terphenyl | 2 | 1 | 84 |
| Example 16 | 1M LiPF6 EC/PC/VC/DFEC/MEC/DMC (23/5/1/1/40/30) | 2 | ortho-terphenyl | 2 | 1 | 85 |
| Example 17 | 1M LiPF6 EC/VC/MEC/DMC (28/2/40/30) +2-propynyl methanesulfonate: 1 wt% | 2 | ortho-terphenyl | 2 | 1 | 86 |
| Example 18 | 0.95M LiPF6 + 0.05M LiN(S02CF3)2 EC/VC/MEC/DMC (28/2/40/30) | 2 | ortho-terphenyl | 2 | 1 | 82 |
| Comparative Example 1 | 1 M LiPF6 EC/VC/MEC/DMC (28/2/40/30) | none | none | - | - | 67 |
| Comparative Example 2 | 1M LiPF6 EC/VC/MEC/DMC (28/2/40/30) | none | ortho-terphenyl | 4 | - | 69 |
| Comparative Example 3 | 1M LiPF6 EC/VC/MEC/DMC (28/2/40/30) | 4 | none | - | - | 64 |

Examples 19 to 20, Comparative Example 4:

Positive electrode sheets were produced, using $LiFePO_4$ (positive electrode active material) in place of the positive electrode active material used in Examples 6 and 11, and Comparative Example 1. 90 Percent by mass of $LiFePO_4$ and 5% by mass of acetylene black (electroconductive agent) were mixed, and added to and mixed with a solution previously prepared by dissolving 5% by mass of polyvinylidene fluoride (binder) in 1-methyl-2-pyrrolidone. Thus, a positive electrode mixture paste was prepared. The positive electrode mixture paste was applied onto an aluminum foil (collector), dried, processed under pressure, and cut into a predetermined size. Thus, a positive electrode sheet was produced. The charging final voltage was 4.0 V, and the discharging final voltage was 2.0 V. The others were the same as in Examples 6 and 11 and Comparative Example 1. Coin batteries were thus produced, and evaluated. The results are shown in Table 2.

[Table 2]

| | Composition of Electrolyte Salt Composition of Nonaqueous Electrolytic Solution (ratio by volume of solvents) | Amount added of 1,2,3,4-Tetrahydro-naphthalene (wt.%) | Biphenyl Derivative or Alkylphenol Derivative | AmountAdded of Biphenyl Derivative or Alkylphenol Derivative (wt.%) | Ratio of Amount Added of (Biphenyl Derivative or Alkylphenol Derivative/ 1,2,3,4-Tetrahydronaphthalene) | Discharge Capacity Recovery Rate after low-temperature cycle test (%) |
|---|---|---|---|---|---|---|
| Example 19 | 1M LiPF6 EC/VC/MEC/DMC (28/2/40/30) | 2 | ortho-terphenyl | 2 | 1 | 84 |
| Example 20 | 1M LiPF6 EC/VC/MEC/DMC (28/2/40/30) | 2 | 2,4-di-tert-butylphenyl methanesulfonate | 2 | 1 | 87 |
| Comparative Example 4 | 1M LiPF6 EC/VC/MEC/DMC (28/2/40/30) | none | none | - | - | 69 |

All the lithium secondary batteries of the above-mentioned Examples 1 to 18 were much better than the lithium secondary batteries of Comparative Example 1 (in which none of 1,2,3,4-tetrahydronaphthalene and a biphenyl derivative and/or an alkylphenol derivative in the present invention was added), Comparative Example 2 (in which only a biphenyl derivative was added) and Comparative Example 3 (in which only 1,2,3,4-tetrahydronaphthalene was added), in point of the recovery rate after low-temperature cycles of the battery after exposure thereof to high temperatures. The batteries of Examples and the batteries of Comparative Examples were disassembled, and the negative electrode therein was analyzed. As a result, it was found that the amount of the Li metal depositing on the negative electrode in the batteries of Examples was smaller than that in Comparative Examples and that the amount of the metal ions such as nickel and manganese ions that would have been released from the positive electrode was smaller in Examples than in Comparative Examples. Accordingly, it is known that, in the batteries of the present invention containing both 1,2,3,4-tetrahydronaphthalene and a biphenyl derivative and/or an alkylphenol derivative, the metal release from the positive electrode was retarded more and the lithium deposition on the negative electrode was therefore retarded more than in the batteries of Comparative Examples, and the batteries of the present invention therefore exhibit a specific effect that could not be seen in the case where the additive compound was added singly.

Comparing Examples 19 and 20 with Comparative Example 4 confirmed the same effect as above even in the case where a lithium-containing metal oxide that contains iron, such as a lithium-containing olivine-type iron phosphate or the like, is used as the positive electrode active material. Accordingly, it is obvious that the effect of the present invention is common to lithium secondary batteries comprising a positive electrode containing, as the positive electrode active material, a lithium-containing metal oxide that contains at least one metal element selected from nickel, manganese and iron, and a negative electrode containing, as the negative electrode active material, a carbon material capable of absorbing and releasing lithium.

INDUSTRIAL APPLICABILITY

The lithium secondary battery using the nonaqueous electrolytic solution of the invention secures good recovery characteristics after low-temperature cycles of the battery even after exposure thereof to high temperatures.

## Claims

1. A lithium secondary battery comprising a positive electrode containing, as the positive electrode active material, a lithium-containing metal oxide that contains at least one metal element selected from nickel, manganese and iron, a negative electrode containing, as the negative electrode active material, a carbon material capable of absorbing and releasing lithium, and a nonaqueous electrolytic solution of an electrolyte salt dissolved in a nonaqueous solvent, **characterized in that** the nonaqueous electrolytic solution contains from 0.1 to 5% by mass of 1,2,3,4-tetrahydronaphthalene, and from 0.1 to 5% by mass of a biphenyl derivative and/or an alkylphenol derivative, and wherein the biphenyl derivative is a compound represented by the following formula (I):

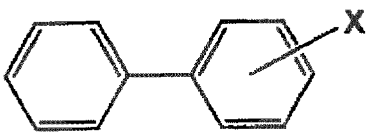

(I)

wherein X represents a hydrogen atom, an alkyl group having from 1 to 6 carbon atoms, a phenyl group, an alkoxy group having from 1 to 6 carbon atoms, or an alkanesulfonyloxy group having from 1 to 6 carbon atoms.

2. The lithium secondary battery according to claim 1, wherein the biphenyl derivative is at least one selected from biphenyl, ortho-terphenyl, 4-methylbiphenyl, 4-ethylbiphenyl, 4-tert-butylbiphenyl, 4-methoxybiphenyl and 4-(methylsulfonyloxy)biphenyl.

3. The lithium secondary battery according to claim 1, wherein the alkylphenol derivative is a compound represented by the following formula (II):

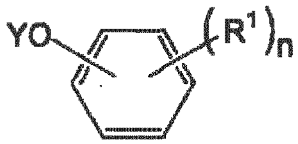

(II)

wherein $R^1$ represents an alkyl group having from 1 to 7 carbon atoms; Y represents an alkyl group having from 1 to 6 carbon atoms, an alkanesulfonyl group having from 1 to 6 carbon atoms, an acyl group having from 2 to 6 carbon atoms, an alkoxycarbonyl group having from 2 to 6 carbon atoms, or a formyl group; n indicates 1 or 2.

**4.** The lithium secondary battery according to claim 3, wherein $R^1$ in the formula (II) is a tert-alkyl group represented by the following formula (III):

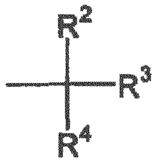

(III)

wherein $R^2$, $R^3$ and $R^4$ each independently represent a methyl group or an ethyl group.

**5.** The lithium secondary battery according to claim 1, wherein the alkylphenol derivative is at least one selected from 4-tert-butylanisole, 4-tert-pentylanisole, 2,4-di-tert-butylanisole, 2,6-di-tert-butylanisole, 4-tert-butylphenyl methanesulfonate, 4-tert-pentylphenyl methanesulfonate, 2,4-di-tert-butylphenyl methanesulfonate, and 2,6-di-tert-butylphenyl methanesulfonate.

**6.** The lithium secondary battery according to claim 1, wherein the ratio of the content of the biphenyl derivative and/or the alkylphenol derivative to the content of 1,2,3,4-tetrahydronaphthalene is from 0.1 to 1.

**7.** The lithium secondary battery according to claim 1, wherein the lithium-containing metal oxide is a lithium-containing transition metal compound containing at least nickel and manganese, or an olivine-type lithium phosphate containing at least one metal element selected from nickel, manganese and iron.

**8.** The lithium secondary battery according to claim 1, wherein the carbon material is artificial graphite or natural graphite of such that the ratio of the peak intensity I (110) of the (110) plane of the graphite crystal obtained in X-ray diffractiometry of a negative electrode sheet as formed by pressing so that the density of the part except the collector of the negative electrode could be 1.5 g/$cm^3$, to the peak intensity I (004) of the (004) plane thereof, I (110) /I (004) is from 0.01 to 0.5.

**9.** A nonaqueous electrolytic solution for a lithium secondary battery that comprises a positive electrode containing, as the positive electrode active material, a lithium-containing metal oxide that contains at least one metal element selected from nickel, manganese and iron, a negative electrode containing, as the negative electrode active material, a carbon material capable of absorbing and releasing lithium, and a nonaqueous electrolytic solution of an electrolyte salt dissolved in a nonaqueous solvent; **characterized in that** the nonaqueous electrolytic solution of an electrolyte salt dissolved in a nonaqueous solvent contains from 0.1 to 5% by mass of 1,2,3,4-tetrahydronaphthalene, and from 0.1 to 5% by mass of a biphenyl derivative and/or an alkylphenol derivative, and wherein the biphenyl derivative is a compound represented by the following formula (I):

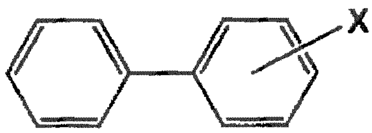

(I)

wherein X represents a hydrogen atom, an alkyl group having from 1 to 6 carbon atoms, a phenyl group, an alkoxy group having from 1 to 6 carbon atoms, or an alkanesulfonyloxy group having from 1 to 6 carbon atoms.

**Patentansprüche**

1. Lithiumsekundärbatterie, umfassend eine positive Elektrode, enthaltend ein Lithium enthaltendes Metalloxid als ein aktives Material der positiven Elektrode, welches mindestens ein Metallelement enthält, welches ausgewählt wird aus Nickel, Mangan und Eisen, eine negative Elektrode, enthaltend ein Kohlenstoffmaterial als ein aktives Material der negativen Elektrode, welches Lithium absorbieren und freisetzen kann, und eine nichtwässrige Elektrolytlösung eines Elektrolytsalzes, welches in einem nichtwässrigen Lösungsmittel gelöst ist, **dadurch gekennzeichnet, dass** die nichtwässrige Elektrolytlösung von 0,1 bis 5 Massen-% 1,2,3,4-Tetrahydronaphthalin und von 0,1 bis 5 Massen-% eines Biphenylderivates und / oder eines Alkylphenolderivates enthält, und worin das Biphenylderivat eine Verbindung ist, die durch die folgende Formel (I) dargestellt wird:

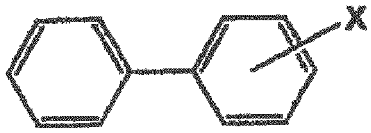

(I)

worin X für ein Wasserstoffatom, eine Alkylgruppe mit 1 bis 6 Kohlenstoffatomen, eine Phenylgruppe, eine Alkoxygruppe mit 1 bis 6 Kohlenstoffatomen oder eine Alkansulfonyloxygruppe mit 1 bis 6 Kohlenstoffatomen steht.

2. Lithiumsekundärbatterie nach Anspruch 1, worin das Biphenylderivat mindestens eines ist, welches ausgewählt wird aus Biphenyl, ortho-Terphenyl, 4-Methylbiphenyl, 4-Ethylbiphenyl, 4-tert-Butylbiphenyl, 4-Methoxybiphenyl und 4-(Methylsulfonyloxy)biphenyl.

3. Lithiumsekundärbatterie nach Anspruch 1, worin das Alkylphenolderivat eine Verbindung ist, welche durch die folgende Formel (II) dargestellt wird,

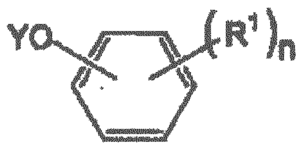

(II)

worin $R^1$ für eine Alkylgruppe mit 1 bis 7 Kohlenstoffatomen steht; Y für eine Alkylgruppe mit 1 bis 6 Kohlenstoffatomen, eine Alkansulfonylgruppe mit 1 bis 6 Kohlenstoffatomen, eine Acylgruppe mit 2 bis 6 Kohlenstoffatomen, eine Alkoxycarbonylgruppe mit 2 bis 6 Kohlenstoffatomen oder eine Formylgruppe steht; n für 1 oder 2 steht.

4. Lithiumsekundärbatterie nach Anspruch 3, worin $R^1$ in der Formel (II) eine tert-Alkylgruppe ist, welche durch die folgende Formel (III) dargestellt wird:

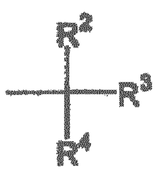

(III)

worin $R^2$, $R^3$ und $R^4$ jeweils unabhängig voneinander für eine Methylgruppe oder eine Ethylgruppe stehen.

5. Lithiumsekundärbatterie nach Anspruch 1, worin das Alkylphenolderivat mindestens eines ist, welches ausgewählt wird aus 4-tert-Butylanisol, 4-tert-Pentylanisole, 2,4-di-tert-Butylanisol, 2,6-di-tert-Butylanisol, 4-tert-Butylphenylmethansulfonat, 4-tert-Pentylphenylmethansulfonat, 2,4-di-tert-Butylphenylmethansulfonat und 2,6-di-tert-Butylphenylmethansulfonat.

6. Lithiumsekundärbatterie nach Anspruch 1, worin das Verhältnis des Gehalts des Biphenylderivats und / oder des Alkylphenolderivats zum Gehalt des 1,2,3,4-Tetrahydronaphthalins von 0,1 bis 1 ist.

7. Lithiumsekundärbatterie nach Anspruch 1, worin das Lithium enthaltende Metalloxid eine Lithium enthaltende Übergangsmetallverbindung, enthaltend mindestens Nickel und Mangan, oder ein Lithiumphosphat des Olivin-Typs, enthaltend mindestens ein Metallelement, welches ausgewählt wird aus Nickel, Mangan und Eisen, ist.

**8.** Lithiumsekundärbatterie nach Anspruch 1, worin das Kohlenstoffmaterial künstliches Graphit oder natürliches Graphit derart ist, dass das Verhältnis der Spitzenintensität I (110) der (110) Ebene des Graphitkristalls, welche durch Röntgendiffraktometrie einer Platte der negativen Elektrode, wie sie gebildet durch Pressen wird, so dass die Dichte des Teils mit Ausnahme des Kollektors der negativen Elektrode 1,5 g/$cm^3$ sein könnte, erhalten wird, zur Spitzenintensität I (004) ihrer (004) Ebene I(110)/I(004) von 0,01 bis 0,5 ist.

**9.** Nichtwässrige Elektrolytlösung für eine Lithiumsekundärbatterie, welche eine positive Elektrode, enthaltend ein Lithium enthaltendes Metalloxid als ein aktives Material der positiven Elektrode, welches mindestens ein Metallelement enthält, welches ausgewählt wird aus Nickel, Mangan und Eisen, eine negative Elektrode, enthaltend ein Kohlenstoffmaterial als ein aktives Material der negativen Elektrode, welches Lithium absorbieren und freisetzen kann, und eine nichtwässrige Elektrolytlösung eines Elektrolytsalzes, welches in einem nichtwässrigen Lösungsmittel gelöst ist, umfasst, **dadurch gekennzeichnet, dass** die nichtwässrige Elektrolytlösung eines Elektrolytsalzes, welches in einem nichtwässrigen Lösungsmittel gelöst ist, von 0,1 bis 5 Massen-% 1,2,3,4-Tetrahydronaphthalin und von 0,1 bis 5 Massen-% eines Biphenylderivates und / oder eines Alkylphenolderivates enthält, und worin das Biphenylderivat eine Verbindung ist, die durch die folgende Formel (I) dargestellt wird:

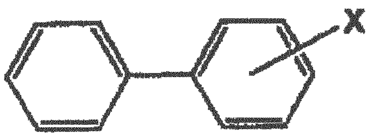

(I)

worin X für ein Wasserstoffatom, eine Alkylgruppe mit 1 bis 6 Kohlenstoffatomen, eine Phenylgruppe, eine Alkoxygruppe mit 1 bis 6 Kohlenstoffatomen oder eine Alkansulfonyloxygruppe mit 1 bis 6 Kohlenstoffatomen steht.

## Revendications

**1.** Batterie secondaire au lithium comprenant une électrode positive contenant comme le matériau actif d'électrode positive un oxyde de métal contenant du lithium qui contient au moins un élément de métal sélectionné parmi du nickel, du manganèse et du fer, une électrode négative contenant comme le matériau actif d'électrode négative un matériau de carbone capable d'absorber et libérer du lithium et une solution électrolytique non-aqueuse d'un sel électrolytique dissous dans un solvant non-aqueux, **caractérisée en ce que**
la solution électrolytique non-aqueuse contient de 0,1 à 5 % en masse du 1,2,3,4-tétrahydronaphtalène et de 0,1 à 5 % en masse d'un dérivé de biphényle et / ou d'un dérivé d'alkylphénol et dans laquelle le dérivé de biphényle est un composé représenté par la formule (I) suivante :

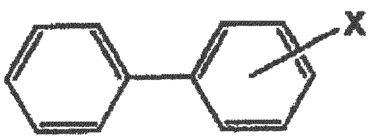

(I)

dans laquelle X représente un atome d'hydrogène, un groupe alkyle ayant de 1 à 6 atomes de carbone, un groupe phényle, un groupe alcoxyle ayant de 1 à 6 atomes de carbone ou un groupe alkanesulfonyloxy ayant de 1 à 6 atomes de carbone.

**2.** Batterie secondaire au lithium selon la revendication 1, dans laquelle le dérivé de biphényle est au moins l'un sélectionné parmi du biphényle, de l'ortho-terphényle, du 4-méthylbiphényle, du 4-éthylbiphényle, du 4-tert-butylbiphényle, du 4-méthoxybiphényle et du 4-(méthylsulfonyloxy)biphényle.

**3.** Batterie secondaire au lithium selon la revendication 1, dans laquelle le dérivé d'alkylphénol est un composé représenté par la formule (II) suivante :

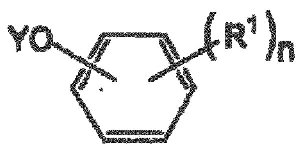

(II)

dans laquelle $R^1$ représente un groupe alkyle ayant de 1 à 7 atomes de carbone ; Y représente un groupe alkyle ayant de 1 à 6 atomes de carbone, un groupe d'alkansulfonyle ayant de 1 à 6 atomes de carbone, un groupe acyle ayant de 2 à 6 atomes de carbone, un groupe alkoxycarbonyle ayant de 2 à 6 atomes de carbone ou un groupe formyle ; n représente 1 ou 2.

4. Batterie secondaire au lithium selon la revendication 3, dans laquelle $R^1$ dans la formule (II) est un groupe tert-alkyle représenté par la formule (III) suivante :

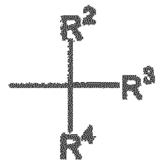

(III)

dans laquelle chacun de $R^2$, $R^3$ et $R^4$ représente indépendamment un groupe méthyle ou un groupe éthyle.

5. Batterie secondaire au lithium selon la revendication 1, dans laquelle le dérivé d'alkylphénol est au moins l'un sélectionné parmi du 4-tert-butylanisole, du 4-tert-pentylanisole, du 2,4-di-tert-butylanisole, du 2,6-di-tert-butylanisole, du méthanesulfonate de 4-tert-butylphényle, du méthanesulfonate de 4-tert-pentylphényle, du méthanesulfonate de 2,4-di-tert-butylphényle et du méthanesulfonate de 2,6-di-tert-butylphényle.

6. Batterie secondaire au lithium selon la revendication 1, dans laquelle le rapport de la teneur du dérivé de biphényle et / ou du dérivé de l'alkylphénol au teneur du 1,2,3,4-tétrahydronaphtalène est de 0,1 à 1.

7. Batterie secondaire au lithium selon a revendication 1, dans laquelle l'oxyde de métal contenant du lithium est un composé d'un métal de transition contenant du lithium contenant au moins du nickel et du manganèse ou un phosphate de lithium du type olivine contenant au moins un élément de métal sélectionné parmi du nickel, du manganèse et du fer.

8. Batterie secondaire au lithium selon la revendication 1, dans laquelle le matériau de carbone est du graphite artificiel ou du graphite naturel d'une façon que le rapport de l'intensité de pic I (110) du plan (110) du cristal de graphite obtenu par un diffractométrie aux rayons X d'une feuille d'électrode négative comme formée par pression ainsi que la densité de la partie sauf de la collecteur de l'électrode négative pourrait être 1,5 g/cm$^3$, au l'intensité de pic I (004) de son plan (004) I(110)/I(004) est de 0,01 à 0,5.

9. Solution électrolytique non-aqueuse pour une batterie secondaire au lithium qui comprend une électrode positive contenant comme le matériau actif d'électrode positive un oxyde de métal contenant du lithium qui contient au moins un élément de métal sélectionné parmi du nickel, du manganèse et du fer, une électrode négative contenant comme le matériau actif d'électrode négative un matériau de carbone capable d'absorber et libérer du lithium et une solution électrolytique non-aqueuse d'un sel électrolytique dissous dans un solvant non-aqueux, **caractérisée en ce que** la solution électrolytique non-aqueuse d'un sel contient de 0,1 à 5 % en masse du 1,2,3,4-tétrahydronaphtalène et de 0,1 à 5 % en masse d'un dérivé de biphényle et / ou d'un dérivé d'alkylphénol et dans laquelle le dérivé de biphényle est un composé représenté par la formule (I) suivante :

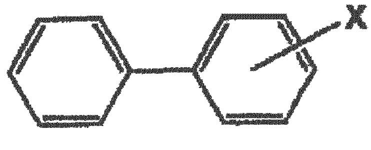

(I)

dans laquelle X représente un atome d'hydrogène, un groupe alkyle ayant de 1 à 6 atomes de carbone, un groupe

phényle, un groupe alcoxyle ayant de 1 à 6 atomes de carbone ou un groupe alkanesulfonyloxy ayant de 1 à 6 atomes de carbone.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003229171 A
- US 20050053843 A1
- JP 2003257479 A